# EUROPEAN PATENT APPLICATION

(11) **EP 4 538 572 A1**
(43) Date of publication of application: **16.04.2025**
(21) Application number: 23857616.9
(22) Date of filing: 09.08.2023
(51) Int. Cl.: F16K 31/06, F16K 15/18, F16K 1/46, B60T 13/68, B60T 8/36, B01D 35/02, F16J 15/02

(54) **CHECK VALVE-INTEGRATED NORMALLY CLOSED TYPE SOLENOID VALVE**

(30) Priority: 24.08.2022 KR 20220106468
(71) Applicant: ERAE AMS Co., Ltd., Dalseong-gun Daegu 42981 (KR)
(72) Inventor: LEE, Han Jin, Dalseong-Gun Daegu 42981 (KR); KO, In Seok, Dalseong-Gun Daegu 42981 (KR); AN, Sang Gak, Dalseong-Gun Daegu 42981 (KR)
(74) Representative: Manitz Finsterwald Patent- und Rechtsanwaltspartnerschaft mbB
(86) International application number: PCT/KR2023/011721
(87) International publication number: WO 2024/043582

(57) **Abstract**

A solenoid valve according to an embodiment of the present invention is installed in a valve block and controls flow between a first flow path and a second flow path of the valve block. The solenoid valve includes: a seat member having an orifice that fluidly connects the first flow path and the second flow path; an armature configured to selectively open and close the orifice through a forward and backward movement so as to selectively form a main flow path connecting the first flow path and the second flow path; a magnet core configured to provide a driving force capable of causing movement of the armature for selective formation of the main flow path; a filter member installed so as to filter out impurities contained in oil flowing between the first flow path and the second flow path; and a check valve structure configured to form a unidirectional auxiliary flow path connecting the first flow path and the second flow path. The check valve structure includes: one or more oil passages provided in the filter member; and a lip seal disposed in a space connected to the oil passage. The lip seal is disposed in a space between the filter member and the valve block so as to be installed in a state supported by the filter member and the valve block.

## Description

### [Technical Field]

The present invention relates to a solenoid valve applied to an electronic brake system of a vehicle.

### [Background Art]

A solenoid valve with an on/off function is used to supply or block hydraulic pressure to wheel brakes or to maintain or release hydraulic pressure discharged from wheel brakes. The electronic braking system of a vehicle may include such a normally closed type solenoid valve.

A solenoid valve used to regulate the hydraulic pressure discharged from the wheel brakes is typically a normally closed type solenoid valve. The normally closed solenoid valve remains in an off position to keep hydraulic pressure supplied to the wheel brakes when braking of the wheel brakes needs to be maintained, and conversely, is switched to an on position to allow hydraulic pressure to be discharged from the wheel brakes when braking needs to be released.

In the conventional normally closed type solenoid valves, a check valve is separately provided externally. This separate placement of the check valve outside the solenoid valve causes a problem of an increase in an overall size of the device and a requirement of a larger installation space.

Korean Patent Registration No. 10-2273572 and Japanese Patent Publication No. 2016-102563 disclose a solenoid valve equipped with an integrated check valve. In Korean Patent Registration No. 10-2273572, a lip seal integrated with the check valve is positioned between a filter member and an orifice member so that the inclined protrusion contacts the outer circumferential surface of the orifice member, or between a valve block and a seat member so that the inclined protrusion contacts the outer circumferential surface of the seat member, and this design results in a complex assembly process for

the lip seal and increases the risk of damaging the inclined protrusion during assembly. Similarly, in Japanese Patent Publication No. 2016-102563, the lip seal is positioned between the seat member and the valve block so that the inclined protrusion contacts the valve block, leading to similar problems.

Therefore, there is a demand for a solenoid valve that is more compact and simplifies the manufacturing process by reducing or standardizing the number of components. This would help streamline production and lower manufacturing costs.

### <Prior art documents>

- Korean Patent Registration No. 10-2273572 (registration date: 2021.07.07.)
- Japanese Patent Publication No. 2016-102563 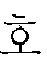 (publication date: 2016.06.02.)

### [Detailed Description of the Invention]

### [Technical Object]

The object that the present invention aims to solve is to provide a solenoid valve that is compact and allows for the common use of components.

### [Technical Solution]

A solenoid valve according to an embodiment of the present invention is installed in a valve block and controls flow between a first flow path and a second flow path of the valve block. The solenoid valve includes: a seat member having an orifice that fluidly connects the first flow path and the second flow path; an armature configured to selectively open and close the orifice through a forward and backward movement so as to selectively form a main flow path connecting the first flow path and the second flow path; a magnet core configured to provide a driving force capable of causing movement of the armature for selective formation of the main flow path; a filter member installed so as to filter out impurities contained in oil flowing between the first flow path and the second flow path; and a check valve structure configured to form a unidirectional auxiliary flow path connecting the first flow path and the second flow path. The check valve structure includes: one or more oil passages provided in the filter member; and a lip seal disposed in a space connected to the oil passage. The lip seal is disposed in a space between the

filter member and the valve block so as to be installed in a state supported by the filter member and the valve block.

The filter member may include a lip seal support portion for supporting the lip seal, and the lip seal may be disposed in a space between the lip seal support portion and the valve block.

The lip seal may include a support portion supported by the valve block and an inclined protrusion that extends obliquely from the support portion so as to be in contact with the lip seal support portion.

The support portion may be configured to be supported by the valve block, and the inclined protrusion may be configured to extend obliquely from an inside of the support portion so as to be in contact with the lip seal support portion.

The filter member may include the lip seal support portion, a transverse extension portion extending transversely from one end of the lip seal support portion, a plurality of filter support portions connected to the transverse extension portion, and a filter fixed to the filter support portions.

The oil passage may be formed in the transverse extension portion so as to be in communication with a space in which the lip seal is disposed.

The oil passage may be formed so as to be connected to an inner space of the filter and is configured such that oil passing through the filter flows into the oil passage.

The first flow path may be located near a side surface of the filter member and the second flow path is located near a lower end of the filter member, and the lip seal may be configured to form a unidirectional auxiliary flow path leading from the first flow path to the second flow path.

The first flow path may be located near a lower end of the filter member and the second flow path is located near a side surface of the filter member, and the lip seal may be configured to form a unidirectional auxiliary flow path leading from the first flow path to the second flow path.

The lip seal may be configured to be installed in a normal state or an upside-down state in a space between the filter member and the valve block, so as to selectively form a unidirectional auxiliary flow path leading from the first flow path to the second flow path or a unidirectional auxiliary flow path leading from the second flow path to the first flow path.

According to another embodiment of the present invention, a solenoid valve installed in a valve block to control flow between a first flow path and a second flow path of the valve block includes: a seat member having an orifice that can fluidly connect the first flow path and the second flow path; an armature configured to selectively open and close the orifice by a forward and backward movement so as to selectively form a main flow path connecting the first flow path and the second flow path; a magnet core that provides a driving force capable of causing the armature to move for selective formation of the main flow path; a filter member installed so as to filter out impurities contained in oil flowing between the first flow path and the second flow path; and a lip seal installed between the filter member and the valve block and configured to form a unidirectional auxiliary flow path connecting the first flow path and the second flow path.

The filter member may include a lip seal support portion formed so as to be able to come into contact with the lip seal, and wherein the lip seal comprises a ring-shaped support portion supported by the valve block, and an inclined protrusion configured to extend obliquely from an inside of the ring-shaped support portion so as to be able to come into contact with the lip seal support portion.

The filter member may include a transverse extension portion extending transversely from one end of the lip seal support portion, and wherein the transverse extension portion forms an oil passage that fluidly connects the first flow path and a space in which the lip seal is disposed.

### [Effect of the Invention]

According to the present invention, a compact structure can be achieved by implementing the solenoid valve with an integrated lip seal. Furthermore, the common use of the lip seal is possible, even when the flow path direction changes due to a change in the installation orientation of the lip seal. Additionally, by allowing oil filtered by a filter to remove impurities to pass through the lip seal, the durability of the lip seal can be improved.

### [Brief Description of the Drawings]

FIG. 1 is a cross-sectional view of a solenoid valve according to an embodiment of the present invention.
FIG. 2 is an enlarged view of a part of FIG. 1.
FIG. 3 is a cross-sectional view of a lip seal of a solenoid valve according to an embodiment of the present invention.
FIG. 4 is a perspective view of a filter unit of a solenoid valve according to an embodiment of the present invention.
FIG. 5 is a bottom perspective view of a filter unit of a solenoid valve according to an embodiment of the present invention.
FIG. 6 is a plan view of a filter unit of a solenoid valve according to an embodiment of the present invention.
FIG. 7 is a cross-sectional view of a solenoid valve according to another embodiment of the present invention.

### [Best Mode for carrying out the Invention]

Embodiments of the present invention will now be described in detail with reference to the accompanying drawings so that those skilled in the art to which the invention pertains can easily implement it. However, the present invention is not limited to the described embodiments and may be implemented in various different forms.

A solenoid valve according to an embodiment of the present invention is a normally closed type solenoid valve that can be applied to an electronic braking system of a vehicle. A solenoid valve 1 is configured to switch between a closed state, i.e., off-state and an open state, i.e., on-state, and operates to selectively form a flow path for hydraulic pressure supplied to a wheel brake to be discharged from the wheel brake.

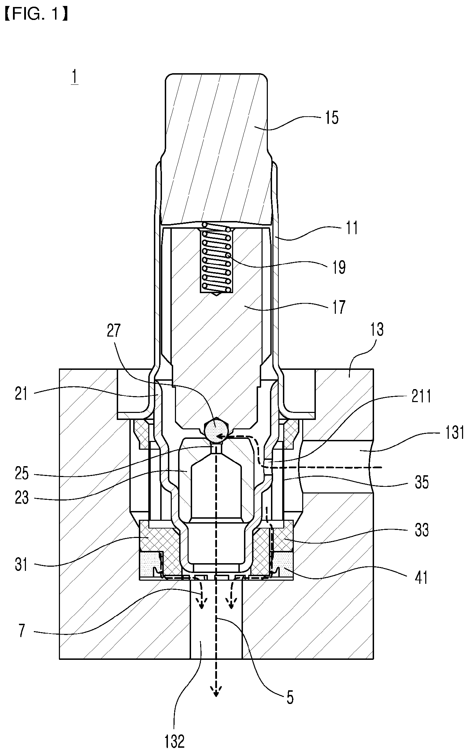

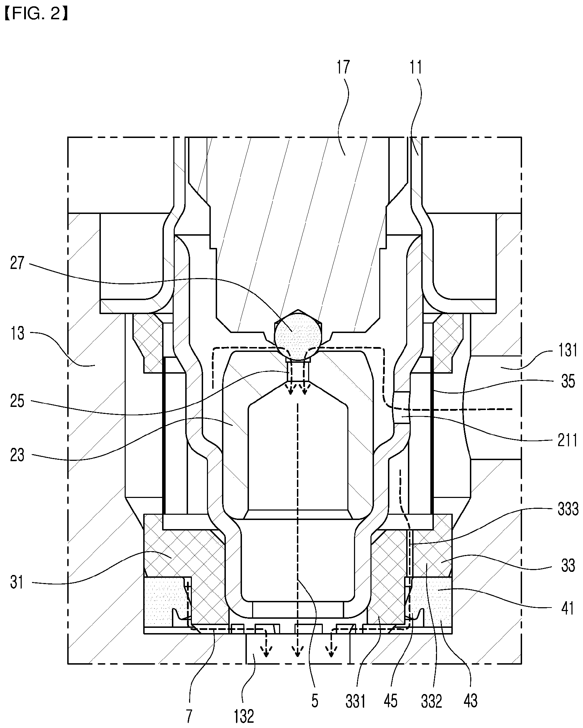

A sleeve 11 may be supported onto a valve block 13 and may have a hollow cylindrical shape extending vertically. A magnet core 15 may be fixed to an upper part of the sleeve 11, and an armature 17 is arranged within the sleeve 11 to be movable in a vertical direction. The armature 17 is elastically supported downward by a resilient member, e.g., a coil spring 19, in a state spaced apart from the bottom of the magnet core 15. When no electric power is applied to the coil (not shown) for activating the magnet core 15, the elastic restoring force of the resilient member 19 pushes the armature 17 downward, implementing the off-state as illustrated in FIG. 1. On the other hand, when power is applied to the coil, the driving force of the magnet core 15 moves the armature 17 upward, compressing the resilient member 19 and thereby implementing the on-state. Specifically, when the armature 17 moves upward from the state shown in FIG. 1, a ball 27 fixed to the lower end of the armature 17 separates from a seat member 23. This separation forms a main flow path 5, as indicated by the dashed lines in FIGs. 1 and 2.

The valve block 13 may include a first flow path 131 fluidly connected to the wheel brake (not shown) and a second flow path 132 fluidly connected to a hydraulic component such as a master cylinder (not shown). The solenoid valve 1 operates to either connect or block the first flow path 131 and the second flow path 132 in response to the vertical movement of the armature 17. In the off-state, where the first flow path 131 and the second flow path 132 are blocked, the solenoid valve 1 prevents oil from being discharged from the wheel brake. Conversely, in the on-state, where the first flow path 131 and the second flow path 132 are connected, oil from the wheel brake can be discharged to the master cylinder through the solenoid valve 1.

A valve sleeve 21 may be fixed to a lower end of the sleeve 11 in a state of being positioned within a recessed groove provided in the valve block 13. A seat member 23 is secured inside the valve sleeve 21 and is formed as a tubular component with an orifice 25 at an upper part thereof. For example, the seat member 23 may be fixed to the valve sleeve 21 through press-fitting. The armature 17 includes a ball 27 fixed to a lower end thereof, and the ball 27 opens or closes the orifice 25 of the seat member 23 as the armature 17 moves vertically. The vertical movement of the ball 27 allows the orifice 25 of the seat member 23 to be open or be closed, thereby fluidly connecting or blocking the first flow path 131 and the second flow path 132.

The valve sleeve 21 has an open bottom that communicates with the second flow path 132 and is fluidly connected to the first flow path 131 through a through-hole 211 formed on its side. A filter member 31 is provided to filter impurities contained in the oil. For example, the filter member 31 may be secured to the valve sleeve 21 and configured to filter impurities from the oil entering through the first flow path 131.

The filter member 31 may include a body part 33 and a filter 35. The filter 35 may be a mesh-type filter with numerous micro-perforations, allowing oil to pass through while filtering out impurities. The filter 35 may be disposed in a space connected to the first flow path 131, enabling the oil entering through the first flow path 131 to pass through the filter 35 before flowing into an inner space of the filter member 31 and moving toward the orifice 25 of the seat member 23. As shown in the drawings, the lower end of the valve sleeve 21 can be press-fitted into the filter member 31 in a state where it is inserted into the space formed by the body part 33 of the filter member 31.

A check valve structure is provided to form a unidirectional flow path between the first flow path 131 and the second flow path 132. Through the check valve structure, a portion of the oil entering through the first flow path 131 is allowed to flow into the second flow path 132, while oil flow in the reverse direction is blocked. This configuration forms an unidirectional auxiliary flow path 7, as indicated by the dashed lines in FIGs. 1 and 2. This check valve structure is implemented by an oil passage 333 formed in the filter member 31 and a lip seal 41.

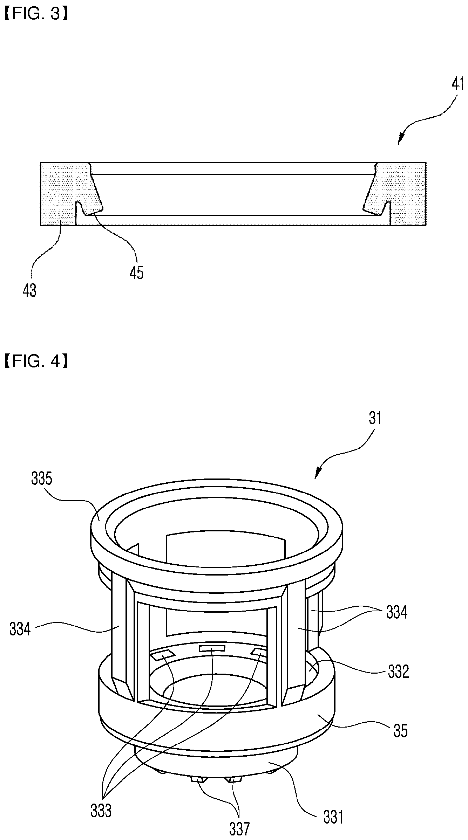

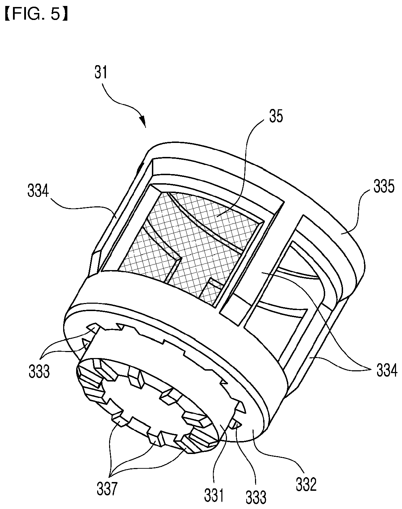

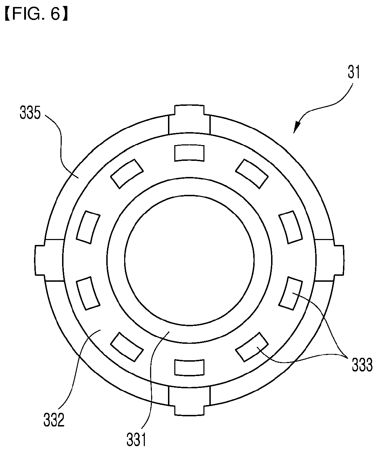

Referring to FIGs. 4 to 6, the body part 33 of the filter member 31 forms an oil passage 333 extending in the vertical direction to implement the check valve function. The body part 33 includes a lip seal support part 331 that extends vertically and a transverse extension part 332 that extends radially outward from the top of the lip seal support part 331. Additionally, the body part 33 may further include a plurality of filter support parts 334 extending upward from the radial outer edge of the transverse extension part 332 and a ring-shaped upper support part 335 provided at the top of the filter support parts 334. Four filter support parts 334 can be arranged at equal intervals along the circumferential direction, and although not shown in FIG. 4, filters 35 can be positioned in the spaces between these filter support parts 334. The oil passage 333 is formed to be exposed to the inner space of the filter 35 mounted on the body part 33. This configuration allows oil entering through the first flow path 131 to pass through the filter 35 before flowing into the oil passage 333.

The lip seal support part 331 may have a roughly annular ring shape, and the lip seal 41 can be positioned in the space surrounded by the lip seal support part 331, the transverse extension part 332, and the valve block 13, as shown in FIG. 2. At this time, the oil passage 333 fluidly connects the space above the transverse extension part 332 with the space where the lip seal 41 is placed. Referring to FIG. 3, the lip seal 41 may include a ring-shaped support part 43 and an inclined protrusion 45 extending obliquely from the support part 43. As shown in FIGs. 2 and 3, the inclined protrusion 45 is positioned on the radially inner side of the support part 43 and may extend obliquely downward from the upper side of the support part 43. The lip seal 41 may be made of a material such as rubber that allows elastic deformation and recovery.

One or more protrusions 337 are formed at the bottom of the lip seal support part 331, and these protrusions 337 support the filter member 31 on the valve block 13, allowing oil that has passed through the lip seal 41 to flow through the spaces between the protrusions 337 and be then discharged into the second flow path 132. Oil entering the space where the inclined protrusion 45 of the lip seal (41) is located, via the oil passage 333, deforms the inclined protrusion 45 while moving downward and is discharged through the second flow path 132. In this regard, the shape of the inclined protrusion 45 blocks oil flow in the opposite direction. This configuration creates the oil flow path 7 as indicated by the dashed lines in FIGs. 1 and 2.

According to the embodiment of the present invention, since the lip seal 41 is seated in the space between the valve block 13 and the body part 33 of the filter member 31, the assembly of the lip seal 41 is not only easier and at the same time the risk of damage during assembly can be minimized. In particular, the inclined protrusion 45 of the lip seal 41 comes into contact with the lip seal support part 331 of the filter member 31 and is secured to the filter member 31, while the ring-shaped support part 43 is supported by the valve block 13, this configuration preventing damage to the inclined protrusion 45 during the assembly process. Additionally, because the oil passage 333 for supplying oil to the space where the lip seal 41 is installed is formed as a through-hole in the body part 33 of the filter member 31, the check valve structure can be implemented with a simple design. Furthermore, as the oil passage 333 is exposed to the space where the oil filtered through the filter 35 is located, the oil supplied to the lip seal 41 is free of impurities filtered by the filter 35 and this enhances the durability of the lip seal 41.

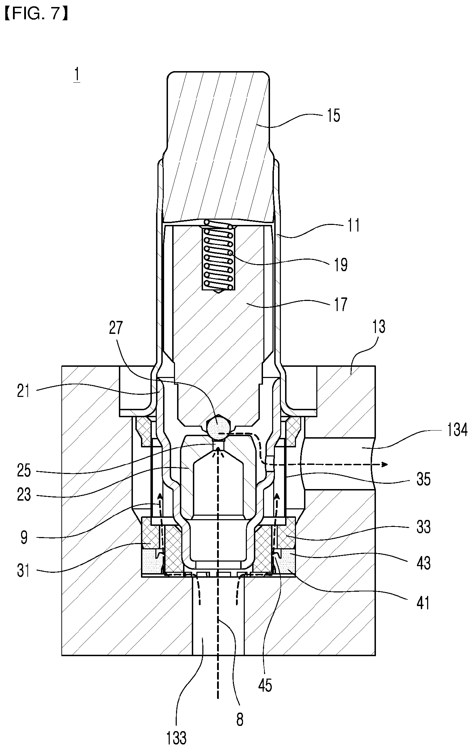

FIG. 7 illustrates a solenoid valve according to another embodiment of the present invention. In this embodiment, the flow path 133 provided at the lower end of the valve block 13 is connected to the wheel brake, and the flow path 134 provided on the side is connected to the master cylinder. This configuration forms the discharge flow path 8 from the wheel brake and the flow path 9 through the check valve structure created by the lip seal 41. The solenoid valve 1 in this embodiment is identical to the previously described embodiment, except that the lip seal 41 is installed upside down. In this way, the lip seal 41 according to the embodiment of the present invention can be adapted to cases where the flow direction of the valve block 13 is reversed by simply installing with the upside-down direction reversed.

Although the embodiments of the present invention have been described above, the scope of the present invention is not limited thereto. Various modifications and improvements made by those skilled in the art using the basic concepts defined in the following claims also fall within the scope of the present invention.

### [Industrial Applicability]

The present invention relates to a solenoid valve that can be applied to vehicles and has industrial applicability.

## Claims

1. A solenoid valve installed in a valve block for controlling flow between a first flow path and a second flow path of the valve block, comprising:
a seat member having an orifice that fluidly connects the first flow path and the second flow path;
an armature configured to selectively open and close the orifice through a forward and backward movement so as to selectively form a main flow path connecting the first flow path and the second flow path;
a magnet core configured to provide a driving force capable of causing movement of the armature for selective formation of the main flow path;
a filter member installed so as to filter out impurities contained in oil flowing between the first flow path and the second flow path; and
a check valve structure configured to form a unidirectional auxiliary flow path connecting the first flow path and the second flow path,
wherein the check valve structure comprises:
one or more oil passages provided in the filter member; and
a lip seal disposed in a space connected to the oil passage, and
wherein the lip seal is disposed in a space between the filter member and the valve block so as to be installed in a state supported by the filter member and the valve block.

2. The solenoid valve of claim 1, wherein the filter member comprises a lip seal support portion for supporting the lip seal, and
wherein the lip seal is disposed in a space between the lip seal support portion and the valve block.

3. The solenoid valve of claim 2, wherein the lip seal comprises a support portion supported by the valve block and an inclined protrusion that extends obliquely from the support portion so as to be in contact with the lip seal support portion.

4. The solenoid valve of claim 3, wherein the support portion is configured to be supported by the valve block, and
wherein the inclined protrusion is configured to extend obliquely from an inside of the support portion so as to be in contact with the lip seal support portion.

5. The solenoid valve of claim 2, wherein the filter member comprises the lip seal support portion, a transverse extension portion extending transversely from one end of the lip seal support portion, a plurality of filter support portions connected to the transverse extension portion, and a filter fixed to the filter support portions.

6. The solenoid valve of claim 5, wherein the oil passage is formed in the transverse extension portion so as to be in communication with a space in which the lip seal is disposed.

7. The solenoid valve of claim 5, wherein the oil passage is formed so as to be connected to an inner space of the filter and is configured such that oil passing through the filter flows into the oil passage.

8. The solenoid valve of claim 1, wherein the first flow path is located near a side surface of the filter member and the second flow path is located near a lower end of the filter member, and
wherein the lip seal is configured to form a unidirectional auxiliary flow path leading from the first flow path to the second flow path.

9. The solenoid valve of claim 1, wherein the first flow path is located near a lower end of the filter member and the second flow path is located near a side surface of the filter member, and
wherein the lip seal is configured to form a unidirectional auxiliary flow path leading from the first flow path to the second flow path.

10. The solenoid valve of claim 1, wherein the lip seal is configured to be installed in a normal state or an upside-down state in a space between the filter member and the valve block, so as to selectively form a unidirectional auxiliary flow path leading from the first flow path to the second flow path or a unidirectional auxiliary flow path leading from the second flow path to the first flow path.

11. A solenoid valve installed in a valve block to control flow between a first flow path and a second flow path of the valve block, comprising:
a seat member having an orifice that can fluidly connect the first flow path and the second flow path;
an armature configured to selectively open and close the orifice by a forward and backward movement so as to selectively form a main flow path connecting the first flow path and the second flow path;
a magnet core that provides a driving force capable of causing the armature to move for selective formation of the main flow path;
a filter member installed so as to filter out impurities contained in oil flowing between the first flow path and the second flow path; and
a lip seal installed between the filter member and the valve block and configured to form a unidirectional auxiliary flow path connecting the first flow path and the second flow path.

12. The solenoid valve of claim 11, wherein the filter member comprises a lip seal support portion formed so as to be able to come into contact with the lip seal, and
wherein the lip seal comprises a ring-shaped support portion supported by the valve block, and an inclined protrusion configured to extend obliquely from an inside of the ring-shaped support portion so as to be able to come into contact with the lip seal support portion.

13. The solenoid valve of claim 12, wherein the filter member comprises a transverse extension portion extending transversely from one end of the lip seal support portion, and
wherein the transverse extension portion forms an oil passage that fluidly connects the first flow path and a space in which the lip seal is disposed.
